# EUROPÄISCHE PATENTSCHRIFT

(11) **EP 0 776 102 B1**
(45) Veröffentlichungstag und Bekanntmachung des Hinweises auf die Patenterteilung: **02.03.2005**
(21) Anmeldenummer: 96118328.2
(22) Anmeldetag: 15.11.1996
(51) Int. Cl.: F41G 7/34

(54) **Verfahren zum drahtlosen Austausch von Informationen zwischen Stationen**
Method for wireless exchange of information between stations
Procédé pour l'échange d'informations entre stations

(30) Priorität: 21.11.1995 DE 19543321
(43) Veröffentlichungstag der Anmeldung: 28.05.1997
(73) Patentinhaber: Diehl Stiftung & Co. KG, 90478 Nürnberg (DE)
(72) Erfinder: Drummer, Clemens, 91301 Forchheim (DE)
(74) Vertreter: Diehl Patentabteilung

(56) Entgegenhaltungen:
- EP-A- 0 600 699
- US-A- 4 954 829
- US-A- 5 347 286

## Beschreibung

Die Erfindung betrifft ein Verfahren zum drahtlosen Austausch von Informationen zwischen Stationen.

Aus der EP 0 600 699 A1 ist es bekannt, zum möglichst störungsfreien Empfang eines über einen Fernsehsatelliten verbreiteten Fernsehprogramms an Bord eines Flugzeugs dessen Empfangsantenne dadurch möglichst genau auf den Fernsehsatelliten auszurichten, dass aus der Inertialnavigation des Flugzeugs und der an Bord des Flugzeugs bekannten Momentanposition des Fernsehsatelliten eine Richtungsinformation für die Empfangsantenne ermittelt wird, bei der es sich gleichermaßen um eine Array-Antenne oder um eine Parabolantenne handeln kann. Diese Richtungsinformation ist aber, zumal nach längeren Flugstrecken, recht ungenau, da weder hinsichtlich des Fernsehsatelliten noch hinsichtlich des Flugzeugs eine aktuelle Standortüberprüfung mittels eines unabhängigen, externen Systems vorgenommen wird; zumal ohnehin etwaige Erkenntnisse über nicht vorhergesehene Ablagen mangels eines Informationsaustausches zwischen dem Fernsehsatelliten und dem Flugzeug gar nicht übermittelt werden könnten.

Aus der DE 33 13 648 A1 ist ein Informationsaustausch in der Form bekannt, daß eine Submunition mittels eines Trägers über ein aufzuklärendes Gelände verbracht wird und nach der Freigabe vom Träger diesen noch als Relais-Station für die Informationsübermittlung zu einer abgesetzten Bodenstation verwendet. Da die Zeitspanne zwischen Aussetzen der Flugkörper-Station (Submunition) und Absturz der Relais-Station (Träger) systembedingt sehr kurz ist, sind auch keine großen Funkstrecken zwischen diesen beiden Stationen zu überbrücken. Irgendwelche Überlegungen zur leistungsmäßigen Optimierung des Funkverkehrs während dieser kurzen Betriebszeitspanne sind in jener Publikation deshalb nicht erwähnt.

Zur zuverlässigeren Informationsübertragung wird in der DE 29 10 956 C2 vorgeschlagen, für die Relaisfunktion nicht einen Satelliten oder ein Flugzeug einzusetzen, sondern die zu übermittelnde Information in einen weiteren Flugkörper einzuspeichern, der sie erst nach Abschuß vom Aufklärungsflugzeug in Richtung auf die Bodenstation wieder aussendet.

Aus der Technik der drahtlosen Signalübertragung ist es allgemein bekannt, daß sich unter vergleichbaren Gegebenheiten der Sendeenergie-Bedarf reduziert, wenn die Abstrahlcharakteristik (die sogen. Keule) der Sendeantenne mit guter Bündelung auf die Empfangsantenne gerichtet ist. Für eine entsprechende Antennen-Nachführung zwischen bewegten Systemen ist es bekannt, empfängerseitig eine Richtungspeilung in Bezug auf die Herkunft der empfangenen Hochfrequenzenergie vorzunehmen. Dafür muß der Sender der anderen Station allerdings arbeiten. Und der schaltungstechnische, insbesondere der signalverarbeitungstechnische Aufwand für eine Richtungspeilung mit daraus abzuleitender Stellgröße für die Verschwenkung der Empfangsantenne ist trotz beschränkter Dynamik vergleichsweise sehr groß, selbst wenn keine mechanische Verschwenkung der Antenne vorgenommen wird, sondern wenn deren Richtcharakteristik über phasengesteuerte Antennenelemente elektronisch verschwenkt wird (vgl. DE 37 20 173 A1 oder GB 2 144 008 A). Eine aus solcher Richtungspeilung abgeleitete Nachführung der Antennen-Hauptkeule versagt deshalb bei sehr schnell manövrierenden Stationen wie etwa Sende- oder Empfangseinrichtungen an Bord von in niederer Höhe über Grund operierendem Fluggerät.

In Erkenntnis dieser Gegebenheiten liegt vorliegender Erfindung die technische Problematik zugrunde, die gattungsgemäßen Maßnahmen dahingehend weiterzubilden, daß auch eine unter raschen Ortswechseln operierende Station im Interesse günstiger Funkübertragungsgegebenheiten mit einer stets optimalen Antennennachführung arbeitet.

Diese Aufgabe ist erfindungsgemäß im wesentlichen dadurch gelöst, daß zusätzlich zu den gattungsgemäßen Maßnahmen auch die Merkmale entsprechend den Kennzeichnungsteilen der Hauptansprüche verwirklicht werden.

Die Lösung basiert demzufolge auf der grundsätzlichen Überlegung, die schaltungstechnischen und vor allem dynamischen Probleme der Richtungspeilung für die Antennennachführung dadurch zu eliminieren, daß eine Relais-Station mit an Bord des Projektils bekanntem Standort eingesetzt wird. Wenn dann der eigene Standort (etwa über die Satelliten-Navigation) sowie die eigene Orientierung im Raum ebenfalls aktuell bekannt sind, läßt sich unmittelbar, ohne Peilerfordernisse, eine Richtungsinformation zur Relais-Station (z. B. bezogen auf ein flugkörperfestes Koordinatensystem) berechnen und die Flugkörper-Antenne entsprechend diesem Rechenergebnis ausrichten, vorzugsweise im Wege der Phasenansteuerung einer Multiarray-Antenne. Dies aus zwei Relativpositionen abgeleitete Antennenorientierung ist somit auch dann funktionsbereit, wenn die Partnerstation nicht auf Sendung ist, also nicht angepeilt werden könnte.

Wenn die Relais-Station geostationär ist, beispielsweise in Form eines sehr hohen Sendeturmes oder in Form eine erdfest rotierenden künstlichen Satelliten, dann kann deren Ortsinformation an Bord des Projektils fest eingespeichert sein. Wenn die Konstanz der Ortskoordinaten der Relais-Station aber nicht zuverlässig ist, etwa aufgrund von Bahnfehlern eines an sich geostationären Satelliten, dann ist es zweckmäßig, daß die Relais-Station eine etwaige aktuelle Abweichung von ihrer Soll-Position aus dem gleichen Satelliten-Navigationssystem ermittelt, auf welches das Projektil zur eigenen Ortsbestimmung zurückgreift. Dann kann eine Ortsinformation, zweckmäßigerweise als Korrekturinformation zur abgespeicherten Ortsinformation, von der Relais-Station zur Flugkörper-Station übermittelt werden, wodurch die Richtungsberechnung beschleunigt und vor allem die Antennenorientierung noch verbessert wird. Diese Variante ist von besondertem Interesse, wenn als Relais-Station wenigstens ein Satellit mit niedriger Umlaufbahn (sog. LEO) dient. Dessen Standart kann auch von der Boden-Station ermittelt und von Zeit zu Zeit zur Aktualisierung des Positionsspeichers an Bord des Flugkörpers übertragen werden.

Eine weitere Steigerung der Genauigkeit ergibt sich, wenn die Boden-Station (mit der die Flugkörper-Station über die Relais-Station kommuniziert) von Zeit zu Zeit auch eine eigene Ortsbestimmung unter Rückgriff auf das weltumspannende System von Navigationssatelliten (GPS oder GLONASS) vornimmt. Da die eigenen stationären Ortskoordinaten hinreichend zuverlässig bekannt sind, ergibt diese Ortsbestimmung einen der Satellitennavigation aktuell anhaftenden Fehler, der zur Präzisierung der Richtungsbestimmung vom Flugkörper zur Relais-Station, und weiter über diese an die Flugkörper-Station, als aktuelle Satellitenkorrekturinformation übermittelt werden kann.

Zusätzliche Alternativen und Weiterbildungen sowie weitere Merkmale und Vorteile der Erfindung ergeben sich aus den weiteren Ansprüchen und, auch unter Berücksichtigung der Darlegungen in der Zusammenfassung, aus nachstehender Beschreibung eines in der Zeichnung unter Beschränkung auf das Wesentliche stark abstrahiert und nicht maßstabsgerecht skizzierten bevorzugten Realisierungsbeispiels zur erfindungsgemäßen Lösung.

In der Zeichnung zeigt:
- Fig. 1: ein Szenario für die Informationsübertragung über eine Relais-Station und
- Fig. 2: die Signalverarbeitung zur optimalen Antennenorientierung an Bord eines Flugkörpers.

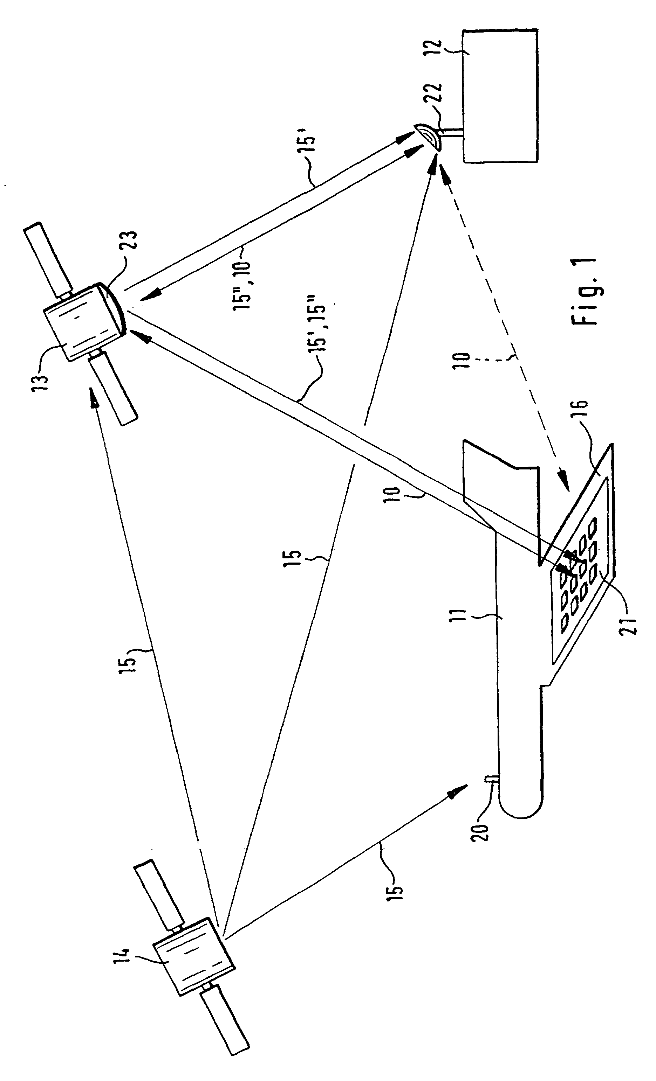

Bei dem in Fig. 1 dargestellten Szenario geht es darum, zwischen einer ersten Station 11 und einer zweiten Station 12 wenigstens eine Information 10 auszutauschen. Wenn deren Antennen 21 bzw. 22 aus Praktikabilitätsgründen nicht in größere Höhe über Grund aufragen können, dann ist eine zuverlässige Funkverbindung für den Austausch der Informationen 10 mittels eines typischerweise oberhalb der UKW-Frequenzen liegenden Trägers wegen der durch Bodenunebenheiten und Bewuchs hervorgerufenen Abschattungen nicht gewährleistet. Das gilt insbesondere, wenn wenigstens eine der Stationen (hier 11) in niederer Höhe beweglich arbeitet und die andere (12) weit davon entfernt geostationär installiert ist. Eine solche Konstellation ist etwa dann gegeben, wenn es sich bei der ersten Station 11 um einen in niedriger Höhe operierenden Flugkörper (wie etwa eine Aufklärungsdrohne oder ein Kampfhubschrauber) handelt, der zur Übergabe von Aufklärungsdaten oder zur Übernahme von Einsatzorders möglichst ständig und zuverlässig in Funkverbindung mit einer entfernten Boden-Station 12 stehen soll.

Deshalb wird die Kommunikation zwischen den Stationen 11 - 12 über eine hoch darüber positionierte dritte oder Relais-Station 13 geführt. Diese nimmt die Information 10 von der einen Station (11 bzw. 12) auf und strahlt sie wieder ab, so daß sie von der anderen Station (12 bzw. 11) angenähert vertikal und deshalb praktisch ungestört empfangen und weiterverarbeitet werden kann.

Um dafür mit möglichst geringen Sendeleistungen auszukommen, werden die Richtcharakteristiken der Antennen 21-22-23 möglichst gut aufeinander ausgerichtet. Das ist unproblematisch, wenn deren erdbezogenen Koordinaten bekannt sind. Andernfalls müßte die Richtung zwischen Sende- und Empfangsantennenpaar nach den Methoden der Funkpeilung aus einer empfangenen Information 10 ermittelt werden, während der Partner sendet, um dementsprechend die aktuellen Antennenorientierungen abgleichen zu können. Das wäre aber insbesondere dann sehr zeitaufwendig, wenn es bei wenigstens einer der Stationen 11, 12, 13 (wie im Falle der Fig. 1 bei der Flugkörper-Station 11) sich um eine relativ zu wenigstens einer der anderen rasch bewegende handelt. Denn dann ergäben sich Korrekturerfordernisse in der Antennennachführung schneller, als sich die entsprechende Peilinformation aus der empfangenen Information 10 an Bord ermitteln ließen. Außerdem ist der schaltungstechnische Zusatzaufwand für die Richtungspeilung recht erheblich, was sich insbesondere bei der apparativen Auslegung einer nicht-stationären Station 11 nachteilig auswirkt.

Deshalb erfolgt gemäß vorliegender Erfindung die Antennen-Nachführung bezüglich der Relais-Station 13 nicht über eine Richtungspeilung, sonder durch Berücksichtigung der Ortsinformationen für einerseits die Relais-Station 13 für und andererseits die Sende- oder Empfangs-Stationen 11-12; und dabei insbesondere für die sehr mobile Flugkörper-Station 11 im Szenario nach Fig. 1. Denn ebenso wie die Position einer Boden-Station 12 ist auch die Position einer Satelliten-Relaisstation 13 - selbst dann, wenn sie nicht geostationär ist, sondern sich gemäß einer bekannten Bahnkurve ändert, wie etwa im Falle der LEOs - relativ genau bekannt. Wenn außerdem an Bord der Flugkörper-Station 11 ständig die Eigenposition ermittelt (oder zwischen Stützstellen mitgekoppelt) wird, dann genügt es für die optimale Ausrichtung derer Antenne 21, die quasi-stationären absoluten Positionsdaten von Flugkörper-Station 11 und Relais-Station 13 relativ zueinander auszuwerten. Das ist apparativ wesentlich sparsamer und vor allem auch wesentlich schneller realisierbar, als die herkömmliche Funkpeilung zur Ermittlung der relativen Momentanrichtung zum Funkpartner.

Navigationsfehler, die im Laufe der Zeit zu einer Fehlausrichtung der Antenne 21 führen würden, lassen sich eliminieren, wenn zumindest von Zeit zu Zeit die an Bord der Flugkörper-Station 11 ermittelte Eigenposition über Kontaktaufnahme zu einem Ortungssatelliten-System 14 aktualisiert wird. Darüber läßt sich bekanntlich mit großer Präzision der aktuelle eigene Standort ermitteln, und daraus dann die genaue Richtung von dieser Station 11 aus zu dem Standort der Relais-Station 13.

In gleicher Weise kann die Relais-Station 13 vom Ortungssatelliten-System 14 Ortsdaten 15 über den eigenen momentanen Standort beziehen und als Ortsdaten 15' für die Feinausrichtung von Antennen 21, 22 abstrahlen. Das ist insbesondere erforderlich, wenn die Relaisfunktion nicht wenigstens quasi-stationär realisiert wird, sondern etwa mittels eines Kleinflugzeuges (vgl. die Relais-Drohne in WEHRTECHNIK 1995 Heft 9 Seite 48 unten links).

Auch dann, wenn die Positionsdaten der ortsfesten Station 12 bekannt sind, kann es zweckmäßig sein, hier zusätzlich Ortsdaten 15 vom Ortungssatelliten-System 14 aufzunehmen. Sofern diese von den gesicherten eigenen Positionsdaten abweichen, ist damit eine Korrekturgröße 15" gewonnen, die über die bidirektionalen Funkstrecken zur Relais-Station 13 und von dieser weiter zur Flugkörper-Station 11 für eine noch präzisere Richtungssteuerung der Antenne 21 an Bord der Flugkörper-Station 11 verfügbar wird.

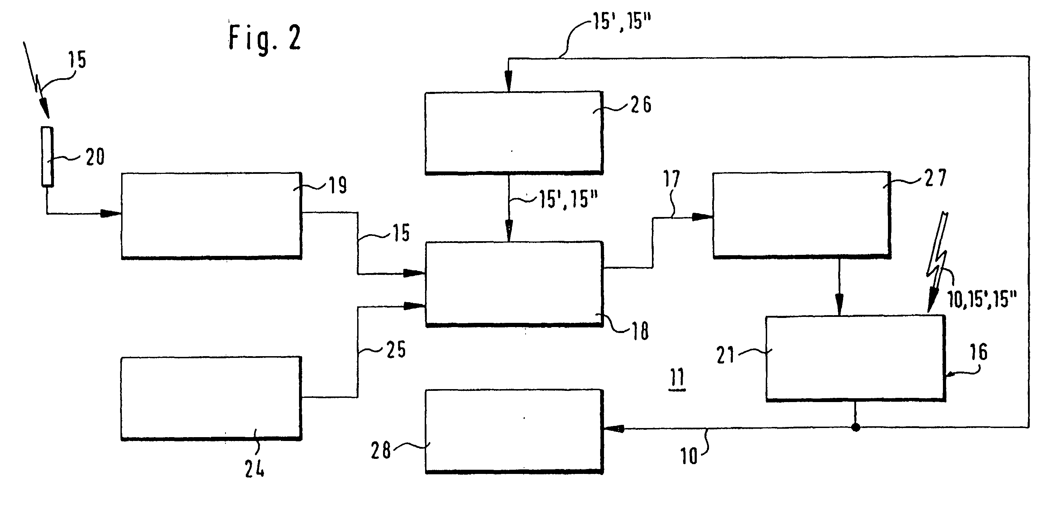

Um die Stabilitätsprobleme einer mechanisch verschwenkbaren Antenne 21 und den Raumbedarf für deren Verschwenkmechanismen zu vermeiden, ist an Bord der Flugkörper-Station 11 eine Phased-Array-Antennenstruktur vorgesehen, im Falle eines Tragflüglers wie einer Aufklärungs-Drohne als Flugkörper-Station 11 etwa auf die Oberfläche wenigstens einer ihrer Flügel 16 aufgebracht (Fig. 1). Die aktuelle Richtungsinformation 17 zur Relais-Station 13 wird an Bord der Flugkörper-Station 11 in einem Prozessor 18 ermittelt. In diesen werden dafür die momentanen eigenen Ortsdaten 15 eingespeist, die von einem Navigations-Empfänger 19 mit Satelliten-Antenne 20 an Bord der Flugkörper-Station 11 ermittelt werden. Außerdem liefert die für die Flugkörper-Steuerung ohnehin vorhandene Fluglage-Sensorik 24 eine aktuelle Raum-Orientierungsinformation 25 (Fig. 2). Die im Prinzip bekannte geostationäre Position der Relais-Station 13 wird in einem Speicher 26 mitgeführt. Die darin abgespeicherten Ortsdaten 15 können wie oben beschrieben an Bord der Relais-Station 13 anhand des Ortungssatelliten-Systemes 14 überprüft werden können, um dem Prozessor 18 erforderlichenfalls korrigierte Ortsdaten 15', und ggf. außerdem eine aktuelle Korrekturgröße 15" von der Boden-Station 12, zur Verfügung zu stellen.

Die so aus der eigenen momentanen Position, aus der eigenen momentanen Lage im Raum und aus dem bekannten Standort der Relais-Station 13 gewonnene aktuelle Richtungsinformation 17 von der Flugkörper-Station 11 zur Relais-Station 13 steuert einen Multiplex-Phasenschieber 27 für die zeitversetzte Anregung der Array-Elemente, also der elektronisch verschwenkbaren Flugkörper-Antenne 21. Deren Hauptempfindlichkeitsrichtung ist so elektronisch immer exakt auf den momentanen Relativstandort der Relais-Station 13 ausgerichtet. Deshalb bestehen optimale Funkgegebenheiten für die dorthin übermittelten oder von dort empfangenen Informationen 10, also insbesondere für den kontinuierlichen Betrieb eines leistungsarmen Senders bzw. Empfängers 28 an Bord der Flugkörper-Station 11.

So kann die Orientierung der Flugkörper-Antenne 21 auch bei sehr schnellen Flugmanövern immer unmittelbar auf die Relais-Station 13 ausgerichtet bleiben, weil keine zeitaufwendige Funkpeilung realisiert wird, sondern unmittelbar die aktuellen Positionsdaten der miteinander kommunizierenden Stationen 11-13 für die Ansteuerung der Array-Antenne 21 verglichen werden.

Um die Ausstattung des Flugkörpers zu minimieren, kann im Rahmen vorliegender Erfindung abweichend vom beschriebenen Ausführungsbeispiel auch vorgesehen sein, die Berechnung der Richtungsinformation 17 extern (in der Relais- oder in der Boden-Station 13, 12) durchzuführen und über Funk zum Antennen-Phasenschieber 27 zu übermitteln. Wenn auch die Schwenk-Antenne 21 vom Flugkörper fort in die Relais-Station 13 verlegt wird, dann ist allerdings eine ungünstige räumliche Momentan-Lage der dort verbleibenden, starr orientierten Antenne nicht mehr kompensierbar.

## Patentansprüche

1. Verfahren zum drahtlosen Austausch von Informationen zwischen einer ersten, insbesondere flugkörperfesten, Station (11) und einer zweiten, insbesondere stationären, Station (12) über eine Relais-Station (13) mittels einer Antenne (21) die zwischen der ersten Station und der Relais-Station nach Maßgabe einer Richtungsinformation ausgerichtet wird, die aus einem Vergleich von über ein Satellitennavigationssystem (14) gewonnenen momentanen Ortsdaten der ersten Station mit den aktuellen Ortsdaten der Relais-Station errechnet wird, welche über ein Satellitennavigationssystem gewonnen oder korrigiert und an die erste Station übermittelt werden.

2. Verfahren nach Anspruch 1,
**dadurch gekennzeichnet,**
**dass** die Hauptkeule einer phasengesteuerten Array-Antenne nach Maßgabe der Richtungsinformation verschwenkt wird.

3. Verfahren nach Anspruch 1 oder 2,
**dadurch gekennzeichnet,**
**dass** eine Boden-Station ihre stationären Ortskoordinaten gegenüber einem Satellitennavigationssystem überprüft und eine etwaige Abweichung als Korrekturgröße an die Relais-Station und über diese an die erste Station übermittelt.

## Claims

1. Method for wire-free interchange of information between a first station (11), which in particular is fixed to an airborne vehicle, and a second station (12), in particular a stationary station, via a relay station (13) by means of an antenna (21) which is aligned between the first station and the relay station on the basis of direction information which is calculated from a comparison of instantaneous position data, obtained via a satellite navigation system (14) for the first station with the current position data for the relay station, which is obtained or corrected via a satellite navigation system and is transmitted to the first station.

2. Method according to Claim 1,
**characterized**
**in that** the main lobe of a phase-controlled antenna array is swivelled on the basis of the direction information.

3. Method according to Claim 1 or 2,
**characterized**
**in that** a ground station checks its stationary position coordinates with respect to a satellite navigation system, and transmits any discrepancy as a correction variable to the relay station and, via this relay station, to the first station.

## Revendications

1. Procédé d'échange sans fil d'informations entre une première station (11) en particulier solidaire d'un corps volant et une deuxième station (12) en particulier stationnaire par l'intermédiaire d'une station relais (13) au moyen d'une antenne (21) qui est orientée entre la première station et la station relais selon une information directionnelle laquelle est calculée à partir d'une comparaison entre des données locales instantanées de la première station obtenues par un système de navigation par satellite (14) et les données locales actuelles de la station relais lesquelles sont obtenues ou corrigées par l'intermédiaire d'un système de navigation par satellite et sont transmises à la première station.

2. Procédé selon la revendication 1, **caractérisé en ce que** le lobe principal d'une antenne en réseau à commande de phase pivote conformément à l'information directionnelle.

3. Procédé selon la revendication 1 ou 2, **caractérisé en ce qu'**une station terrestre vérifie ses coordonnées locales stationnaires par rapport à un système de navigation par satellite et transmet un écart éventuel en tant que grandeur de correction à la station relais et par l'intermédiaire de cette dernière à la première station.
